# EUROPÄISCHE PATENTANMELDUNG

(11) **EP 1 040 850 A2**
(43) Veröffentlichungstag der Anmeldung: **04.10.2000**
(21) Anmeldenummer: 00104925.3
(22) Anmeldetag: 08.03.2000
(51) Int. Cl.: A62B 3/00, B60R 22/32

(54) **Stabförmiges Rettungsgerät**

(30) Priorität: 01.04.1999 DE 19914836
(71) Anmelder: Insassen-Rettungssysteme GmbH, 85092 Kösching (DE)
(72) Erfinder: Sigl, Kurt, 85053 Ingolstadt (DE)
(74) Vertreter: Bergmeier, Werner, Dipl.-Ing.

(57) **Zusammenfassung**

Die Erfindung betrifft ein stabförmiges Rettungsgerät mit einem Schneidwerkzeug (2) und einer das Schneidwerkzeug umgebenden Hülse (6), wobei die Hülse (6) entfernbar ist. Aufgabe der vorliegenden Erfindung ist es, ein Rettungsgerät vorzuschlagen, bei dem das Schneidwerkzeug mit verschiedenen Instrumenten und Werkzeugen kombiniert werden kann. Hierdurch wird das Anwendungsspektrum des Rettungsgeräts vergrößert. Außerdem kann das Rettungsgerät entsprechend dem Bedarf und den Wünschen eines Anwenders leicht und schnell angepaßt werden. Die Aufgabe wird erfindungsgemäß dadurch gelöst, daß mindestens ein Hohlraum (11) zur Aufnahme von mindestens einem weiteren Instrument oder von Gegenständen vorgesehen ist.

## Beschreibung

Die Erfindung betrifft ein stabförmiges Rettungsgerät mit einem Schneidwerkzeug und einer das Schneidwerkzeug umgebenden Hülse, wobei die Hülse entfernbar ist.

Derartige Rettungsgeräte dienen insbesondere zur Befreiung von in einem verunglückten Kraftfahrzeug eingeschlossenen und angegurteten Insassen, wobei eine Schneidvorrichtung zum Zerschneiden der Gurte am Rettungsgerät ausgebildet ist. Darüber hinaus können an dem Rettungsgerät weitere Vorrichtungen ausgebildet sein, wobei diese Vorrichtungen fest an dem Rettungsgerät angeordnet sind.

Aus der DE 35 30 363 A1 ist ein Rettungsgerät bekannt, das an dem einen Ende eines stielförmigen Gehäuseteils nach Art einer Faust ein verbreitetes Gehäuseteil aufweist, indem von der einen Seite her ein bis zum Messer reichender Schlitz und auf der gegenüberliegenden Seite ein Schlagstück angebracht ist. Dieses Rettungsgerät läßt sich wie ein üblicher Hammer benutzen, wobei ein zu trennender Gurt in den bis zum Messer reichenden Einführungsschlitz gebracht wird und dort zertrennt wird.

Das Messer insbesondere ist ungesichert an dem Rettungsgerät angeordnet. Daher ist zu befürchten, daß bei einem Transport des Rettungsgerätes versehentlich Gegenstände an das Messer gelangen und diese beschädigen oder sogar rettende wie zu rettende Personen verletzen. Durch die hammermäßige Ausgestaltung ist dieses Gerät in seinem Abmessungen relativ groß ausgeführt, so daß die Nutzer des Rettungsgeräts dieses nicht ständig mit sich führen.

Ein weiteres rettungsgemäßes Rettungsgerät ist aus der DE 297 174 194.1 bekannt. Dieses Rettungsgerät ist im wesentlichen stabförmig ausgebildet. Die Schneidvorrichtung ist hierbei von einer Schutzkappe umgeben, wodurch die Schneidvorrichtung bei Nichtbedarf sicher aufbewahrt wird, ohne daß eine Verletzungsgefahr besteht. Bei Bedarf wird die Kappe von der Schneideeinrichtung entfernt.

Das Rettungsgerät ist durch seine stabförmige Ausbildung problemlos durch Personen mitführbar. Außerdem ist es so groß, daß es gut und griffig in der Hand liegt. Weiterhin kann an dem Rettungsgerät zusätzlich eine Leuchte fest angeordnet sein, die sich in den der Schneidvorrichtung abgewandten Ende des Gerätes sich befindet. Anstelle der Leuchte kann alternativ eine Selbstverteidigungseinrichtung zum Beispiel eine Gaspatrone mit einer Auslöseeinrichtung angeordnet sein. Allerdings ist bei dieser Ausgestaltung die Selbstverteidigungseinrichtung bzw. die Leuchte immer fest mit der Schneidevorrichtung verbunden.

Aufgabe der vorliegenden Erfindung ist es, ein Rettungsgerät vorzuschlagen, bei dem das Schneidwerkzeug mit verschiedenen Instrumenten und Werkzeugen bzw. Gegenständen kombiniert wird, so daß das Anwendungsspektrum des Rettungsgerätes vergrößert wird und das Rettungsgerät entsprechend dem Bedarf und den Wünschen eines Anwenders leicht und schnell angepaßt wird.

Erfindungsgemäß wird die Aufgabe dadurch gelöst, daß das stabförmige Rettungsgerät wenigstens einen Hohlraum zur Aufnahme von mindestens einem weiteren Instrument bzw. Werkzeug aufweist. Dieses weitere Instrument ist lösbar mit dem Rettungsgerät verbunden und aus diesem erfindungsgemäßen Hohlraum entnehmbar.

Zum Beispiel können in den Hohlraum Taschenlampen, (Markierungs-) Stifte, Bearbeitungswerkzeuge (Messer, Schneidwerkzeuge, Bohrer, Meißel, Inbusschlüssel, Schrauber bzw. Schraubenzieher, etc.), Signal- und Leuchtpatronen, Feuerzeuge, Laserpointer, Selbstverteidigungseinrichtungen etc. eingesetzt werden. Alternativ kann der Hohlraum auch für Lippenstifte oder als Speicher für Geld, insbesondere Münzgeld, oder Adressen bzw. Telefonnummern genutzt werden.

Der Hohlraum kann sowohl geschlossen als Kammer ausgebildet sein. In einer weiteren Ausgestaltung kann vorzugsweise ein schnell lösbarer Verschluß, z.B. Deckel, Klappe oder dergleichen zum Öffnen und Verschließen des Hohlraums vorgesehen sein.

Das Rettungsgerät kann entsprechend dem Bedarf und den Wünschen eines Anwenders ständig angepaßt werden und ist darüber hinaus hinsichtlich seiner Verwendung entsprechend erweiterbar und vielseitig verwendbar. Außerdem kann je nach Erfordernis ein vorhandenes Instrument bzw. ein Gegenstand gegen ein (anderes) Instrument bzw. einen anderen Gegenstand umgehend ausgetauscht werden. Wird der Hohlraum für einen Münzvorrat genutzt, um beispielsweise Kleingeld sofort zur Verfügung für Parkautomaten zu haben, so kann der angelegte Münzspeicher leicht aufgefüllt werden.

Das Schneidwerkzeug des Rettungsgerätes dient beispielsweise zum Zerschneiden von Gurten in Fahrzeugen, so daß im Notfall oder bei einem Unfall Insassen aus dem Fahrzeug schnell und auf leichte Weise befreit werden. Das Schneidwerkzeug ist insbesondere von einer Hülse umgeben, um die Verletzungsgefahr durch das Schneidwerkzeug herabzusetzen. Nur im Bedarfsfall wird die schützende Hülse vom Schneidwerkzeug entfernt.

Die weiteren Instrumente können mühelos und einfach dem erfindungsgemäßen Hohlraum angeordnet werden, wenn der Hohlraum nach außen offen und/oder als Einschub ausgebildet ist. Die weiteren Werkzeuge können dann leicht eingeschoben werden bzw. daraus entfernt werden, wodurch ein zeitraubendes Aufschrauben beispielsweise entfällt. Das zusätzliche Instrument ist dann schnell einsetzbar. Selbstverständlich kann der Aufnahmeraum für das weitere Instrument auch geschlossen sein. Mittels einer lösbaren Kappe, Verschlusses oder dergleichen beispielsweise in der Art eines Schnellverschlusses kann der Hohlraum verschlossen werden.

Um die zusätzlichen, in den Hohlraum eingebrachten Instrumente zu sichern, weist das Schneidwerkzeug und/oder die Hülse und/oder der Hohlraum eine Rutschsicherungseinrichtung auf. Durch diese Einrichtung wird ein nichtgewolltes Herausfallen des Schneidwerkzeugs aus der Hülse verhindert. Darüber hinaus kann durch eine weitere Rutschsicherungseinrichtung das eingebrachte Instrument in dem Hohlraum dauerhaft fixiert werden. Die Rutschsicherung gewährleistet eine rasche und ungehinderte Entnahme des Instrumentes aus dem Hohlraum im Anwendungsfall. Die Rutschsicherungseinrichtung ist so ausgebildet, daß das Instrument bei normaler Beanspruchung des gesamten Rettungsgeräts festgehalten wird und bei Erfordernis das Werkzeug leicht aus dem Hohlraum sich entfernen läßt.

Eine kostengünstige und zuverlässige Rutschsicherungseinrichtung kann durch einen Gummiring ausgebildet werden. Der Gummiring umschließt zum großen Teil oder vollständig das entsprechende Werkzeug in seinem Umfang und sichert das eingebrachte Instrument gegen ungewolltes und ungehindertes Herausfallen aus der Hülse. Alternativ kann die Rutschsicherungseinrichtung auch als Klemmvorrichtung oder dergleichen ausgebildet sein.

Außerdem ist es von Vorteil, wenn der Hohlraum zylinderförmig ausgebildet ist. Durch diese Ausformung lassen sich stabförmige Instrumente in den Hohlraum einbringen. Sind alle Instrumente auf eine vorbestimmte Grundform angepaßt, die formkomplementär ist zu der, vorzugsweise zylinderförmigen, Aushöhlung des Aufnahmeraumes für das Instrument. Eine einfache Grundform ist hierbei ebenfalls zylinderförmig.

Um ein Instrument aus dem erfindungsgemäßen Hohlraum leichter herauszunehmen, ist hierzu die Höhe bzw. Länge des Hohlraums kleiner als die gesamte Länge eines Instrumentes bzw. der Grundform. Das Instrument ragt somit aus dem Hohlraum hinaus und kann gut erfaßt werden. Das Instrument kann ferner zur Erleichterung des Greifens und Herausziehens einen Griff aufweisen. Durch den nicht formschlüssigen Abschluß von Hohlraum und eingebrachten Instrument z.B. Taschenlampe kann das Instrument im Einsatzfall schnell zur Verfügung stehen. Die im Hohlraum angeordnete Taschenlampe kann dann eingeschaltet werden.

Eine am Rettungsgerät und/oder der Hülse ausgebildete Öse dient einem Anwender dazu, das Rettungsgerät zum Beispiel mittels eines Ringes an einem Schlüsselbund oder dergleichen fest anzubringen. Daneben fungiert das Rettungsgerät als eine Art Schlüsselanhänger, wodurch der Anreiz besteht, das Rettungsgerät stets mit sich herumzutragen. Das Rettungsgerät ist dann im Notfall stets und schnell zur Verfügung bzw. zur Hand.

Um den Einsatz und den Wert des Rettungsgeräts noch weiter zu erhöhen, weist die Hülse oder das Schneidwerkzeug eine, vorzugsweise gehärtete Spitze auf. Durch diese Spitze können im Notfall Scheiben eingeschlagen bzw. zertrümmert werden, um Menschen aus einer Notsituation zu befreien.

Die Härtung der Spitze ermöglicht darüber hinaus, daß auch Sicherheitsglas oder Verbundglas zertrümmert werden können. Ist die Spitze am Schneidwerkzeug ausgebildet, so ist sie durch die Hülse zusätzlich geschützt.

Wenn dagegen die Spitze beispielsweise an der Hülse ausgebildet ist und Personen effektiv geschützt werden sollen vor Verletzungen, ist es von Vorteil, daß die Spitze mit einer Schutzschicht versehen ist. Die Schutzschicht der Spitze verringert das Risiko der Verletzungen im Alltagsgebrauch, verringert jedoch nicht die Gebrauchsfähigkeit der Spitze als Zertrümmerungsinstrument im Notfall.

In einer Weiterbildung des Erfindungsgegenstands besteht die Schutzschicht der Spitze aus Kunststoff. Der Kunststoff läßt sich leicht auf der Spitze applizieren und stellt einen kostengünstigen und zuverlässigen Stoff dar.

Bei einer vorteilhaften Weiterbildung des Rettungsgeräts ist das Schneidwerkzeug als Klinge ausgebildet und verfügt über eine Schutzeinrichtung für die Klinge. Das Schneidwerkzeug dient vornehmlich zum Zertrennen von Gurten. Die zum Zerschneiden ausgebildete Klinge soll durch die Schutzeinrichtung den Anwender vor Verletzungen durch die scharfe Klinge schützen. Jedoch ist die Schutzeinrichtung so ausgebildet, daß das Rettungsgerät einfach zu handhaben ist und ein Gurt sich zuverlässig durchtrennen läßt.

Vorteilhafterweise ist die Schutzeinrichtung als ein der Klinge gegenüber angeordneter Vorsprung mit seitlichen Ausnehmungen zur Klinge ausgebildet. Der Vorsprung schützt die Klinge über ihre gesamte Länge, gestattet aber die Einführung zum Beispiel eines Gurtes, so daß der Gurt von der Klinge durchtrennt werden kann.

Die seitlichen Ausnehmungen der Schutzeinrichtung ermöglichen ein leichtes Gleiten der Klinge bzw. des Schneidwerkzeugs durch einen Gurt und schützen darüber hinaus die Klinge derart, daß auch seitlich der Klinge keine Verletzungsgefahr für eine Person entsteht.

In einer vorteilhaften Weiterbildung der Erfindung ist das Rettungsgerät im wesentlichen aus Aluminium ausgebildet. Aluminium ist ein leichter und stabiler Werkstoff, so daß für einen Anwender durch das geringe Gewicht des Rettungsgeräts der Anreiz besteht, das Rettungsgerät ständig mit sich zu führen. So hat dann eine Person das Rettungsgerät stets griffbereit.

Insgesamt ermöglicht die Erfindung, daß ein Rettungsgerät entsprechend den Bedürfnissen und Wünschen eines Anwenders weitergebildet werden kann, wodurch die Variabilität und Anwendung und somit auch der Nutzen deutlich erhöht wird. Im Sinne der Erfindung können Instrumente zum Beispiel Taschenlampen, andere Werkzeuge mit einem Schneidwerkzeug kombiniert werden.

Die Erfindung wird anhand eines Ausführungsbeispiels näher erläutert.

Es zeigen:
- **Figur 1**: Ein erfindungsgemäßes Rettungsgerät;
- **Figur 2**: das Rettungsgerät (Figur 1) mit einer Taschenlampe;
- **Figur 3**: das Rettungsgerät (Figur 1) mit einem verschlossenen Hohlraum und
- **Figur 4**: ein weiteres erfindungsgemäßes Rettungsgerät.

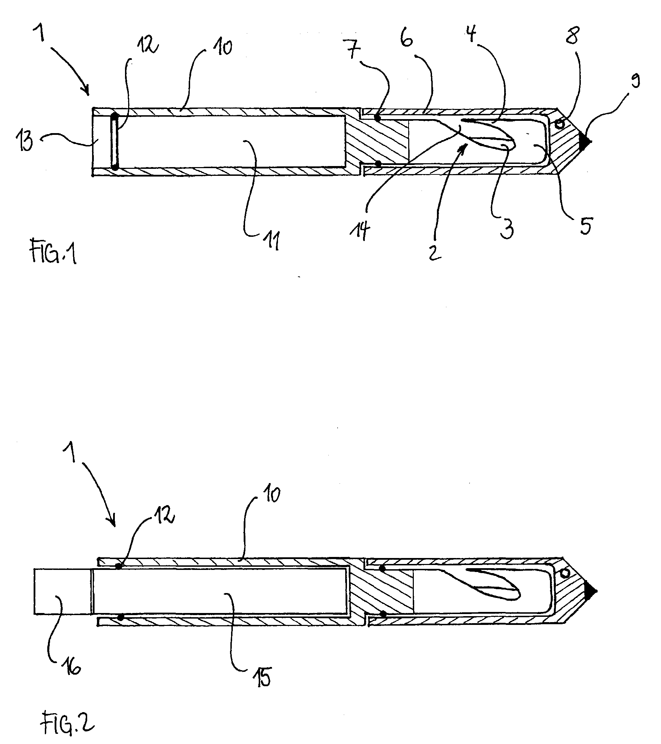

Figur 1 zeigt ein Rettungsgerät 1 im Längsschnitt. Das Rettungsgerät 1 ist stielförmig bzw. stabförmig ausgebildet und weist einen Hohlraum 11 und ein Schneidwerkzeug 2 auf. Im Querschnitt ist das Rettungsgerät 1 im wesentlichen rund ausgeformt. Der Hohlraum 11 ist umgeben von einer Zylinderwandung 10 und weist in der Nähe seines offenen Endes 13 einen in der Innenwandung angebrachten Gummiring 12 auf. Gegenüber dem offenen Ende 13 des Rettungsgeräts 1 ist ein Schneidwerkzeug 2 angebracht.

In den zylinderförmigen Hohlraum 11 kann ein weiteres Rettungsinstrument eingebracht werden. Dieses Rettungsinstrument ist vorzugsweise so ausgebildet, daß es den Hohlraum 11 vollständig ausfüllt. Beispielsweise kann eine kleine stabförmige Taschenlampe in dem Hohlraum 11 aufgenommen werden. Der Gummiring 12 bewirkt, daß die Taschenlampe nicht aus dem Hohlraum 11 herausrutscht.

Darüber hinaus kann die Länge der Zylinderwandung 10 kleiner als die Länge des aufgenommenen Instrumentes, z. B. einer Taschenlampe sein. Hierdurch ist die Taschenlampe nicht vollständig in dem Hohlraum 11 angeordnet, so daß der Kopf einer Taschenlampe aus dem Hohlraum 11 hinausragt. An dem Kopfende der angebrachten Taschenlampe befindet sich der Leuchtkopf, der in diesem Fall frei betätigbar ist, so daß die Taschenlampe bei Bedarf eingeschaltet werden kann.

Wird die Taschenlampe über einen längeren Zeitraum nicht benutzt, so kann die Taschenlampe umgekehrt in dem Hohlraum 11 angeordnet werden, um den stoßempfindlichen Leuchtkopf vor Beschädigungen zu schützen.

An dem Rettungsgerät 1 ist ferner das Schneidwerkzeug 2 zum Zerschneiden von Gurten oder ähnlichem angeordnet. Dieses Schneidwerkzeug 2 besteht aus einer Klinge 3, die durch einen gegenüber ihr angeordneten Vorsprung 4 Personen vor Verletzungen schützt. Der Vorsprung 4 ist nasenartig ausgebildet und gestattet, daß durch einen Schlitz 14 ein Gurt zu der Klinge 3 eingeführt wird. Das Schneidwerkzeug 2 ist an seinem Kopfteil 5 im wesentlichen abgerundet und weist keine scharfen Kanten aus, so daß Personen vor Verletzungen geschützt werden.

Das im wesentlichen zylinderförmige Schneidwerkzeug 2 ist von einer Hülse 6 vollständig umgeben. Im Bedarfsfall ist die Hülse 6 von dem Schneidwerkzeug entfernbar. Um die Hülse 6 dauerhaft und zuverlässig gegen ein leichtes Abziehen vom Schneidwerkzeug 2 zu sichern, weist das Schneidwerkzeug 2 an seinem unteren Ende einen umlaufenden Gummiring 7 auf. In einer Alternative kann der Gummiring 7 auch in der Innenwandung der Hülse 6 ausgebildet sein.

Die Hülse 6 weist an ihrem geschlossenen Ende eine kegelartige Spitze 9 auf, die vorzugsweise gehärtet ist. Diese Spitze 9 dient zur Zertrümmerung beispielsweise von Autoscheiben, um Fahrinsassen aus einem Unfallfahrzeug zu befreien. In einer Alternative kann eine gehärtete Spitze an dem Kopfteil 5 des Schneidwerkzeugs 2 ausgebildet sein, wodurch Personen vor Verletzungen im gewöhnlichen Gebrauch des Rettungsgeräts 1 als Schlüsselanhänger noch weiter geschützt werden.

Um Personen bei alltäglichem Gebrauch und Mittragen des Rettungsgeräts 1 vor Verletzungen zu schützen, weist die Spitze 9 eine Schutzschicht aus vorzugsweise Kunststoff auf. In einer weiteren Alternative für einen wirksamen Schutz der Spitze 9 kann auch eine lösbare Kappe dafür vorgesehen sein.

Um das Rettungsgerät 1 beispielsweise an einen Schlüsselbund anzubringen, weist die Hülse 6 eine Öse 8 auf. Das Rettungsgerät ist hauptsächlich aus einem leichten und stabilen Werkstoff hergestellt. Als ein derartiger Werkstoff ist Aluminium sehr gut geeignet.

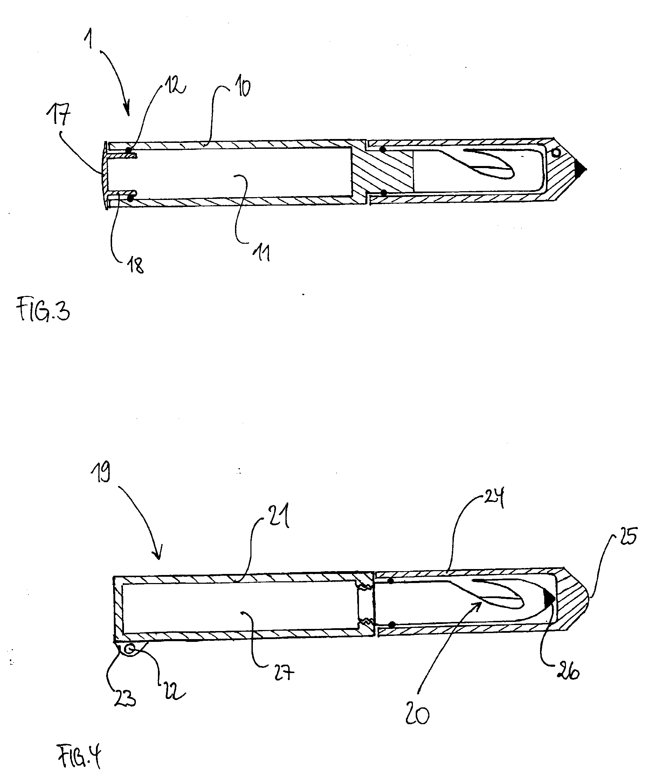

Figur 2 zeigt das Rettungsgerät 1, bei dem in dem erfindungsgemäßen Hohlraum 11 eine Taschenlampe 15 eingebracht ist. Die Taschenlampe 15 weist einen Leuchtkopf 16 auf, der über den Hohlraum des Rettungsgeräts 1 hinausragt. Die Abmaßungen bzw. die Höhe des Hohlraums sind vorzugsweise so gewählt, daß der Leuchtkopf 16 einer handelsüblichen Taschenlampe 15 übersteht, wodurch es möglich ist, daß durch ein Verdrehen des Leuchtkopfes 16 die Taschenlampe eingeschaltet wird. Die Taschenlampe wird vom Gummiring 12 im Hohlraum gehalten.

Wird die Taschenlampe 15 nicht gebraucht, so kann zum Schutz des empfindlichen Leuchtkopfs 16 die Taschenlampe 15 in dem erfindungsgemäßen Hohlraum umgekehrt angeordnet werden. In diesem Fall befindet sich dann der Leuchtkopf 16 im Hohlraum 11.

Alternativ kann der Hohlraum 11 des Rettungsgeräts mit einem Deckel 17 zu einem abgeschlossenem Hohlraum ausgebildet werden (Figur 3). Der Deckel 17 verfügt über Befestigungsarme 18 bzw. eine umlaufende, abschnittsweise oder vollständige Befestigung, die zusammen mit dem umlaufenden Gummiring 12 einen guten Halt des Deckels 17 bewirken in dem abgeschlossen Hohlraum 11 können dann beispielsweise Münzen, Scheine oder Adressen, oder andere kleinere Gegenstände sicher transportiert werden.

Ein weiteres Rettungsgerät 19, zeigt Figur 4. Das Rettungsgerät 19 weist ein Hülsenteil 21 auf, mit einem Hohlraum 27. Der Hohlraum 27 ist hierbei abgeschlossen. Ferner weist das Hülsenteil 21 an dem einen Ende eine Nase 23 auf, mit einer darin ausgebildeten Öse 22. Die Öse 22 kann beispielsweise für die Anbringung an einen Schlüsselbund verwendet werden.

Darüber hinaus ist das Hülsenteil 21 beispielsweise mittels einer Verschraubung oder Verbindung mit einem Schneidwerkzeug 20 lösbar verbunden. Hierdurch kann das Hülsenteil 21 von dem Schneidwerkzeug 20 getrennt werden, so daß aus dem geschlossenen Hohlraum 27 die darin befindlichen Güter oder Instrumente, wie z. B. Pinzette, entnommen werden können. Das Schneidwerkzeug 20 ist umgeben von einer Hülse 24, die an ihrer Frontseite eine Rundung 25 aufweist. Ferner verfügt das Schneidwerkzeug 20 über eine gehärtete Spitze 26, mit der im Notfall Autoscheiben eingeschlagen werden können, zur Rettung von Autoinsassen. Die Spitze 26 ist vorzugswürdig aus einem gehärteten Werkstoff hergestellt.

Die Erfindung ist nicht auf dieses Ausführungsbeispiel beschränkt. Insgesamt wird durch den Erfindungsgegenstand die Vielseitigkeit des Rettungsgerätes erhöht.

## Patentansprüche

1. Stabförmiges Rettungsgerät mit einem Schneidwerkzeug (2, 20) und einer das Schneidwerkzeug umgebenden Hülse (6, 24), wobei die Hülse (2, 24) entfernbar ist, dadurch gekennzeichnet, daß mindestens ein Hohlraum (11, 27) zur Aufnahme von mindestens einem weiteren Instrument oder von Gegenständen vorgesehen ist.

2. Rettungsgerät nach Anspruch 1, dadurch gekennzeichnet, daß der Hohlraum (11) nach außen offen und/oder als Einschub ausgebildet ist.

3. Rettungsgerät nach einem oder mehreren der vorangehenden Ansprüche, dadurch gekennzeichnet, daß das Schneidwerkzeug (2, 20) und/oder die Hülse (6, 24) und/oder der Hohlraum (11) eine Rutschsicherungseinrichtung aufweisen.

4. Rettungsgerät nach einem oder mehreren der vorangehenden Ansprüche, dadurch gekennzeichnet, daß die Rutschsicherungseinrichtung als Gummiring (7, 12) ausgebildet ist.

5. Rettungsgerät nach einem oder mehreren der vorangehenden Ansprüche, dadurch gekennzeichnet, daß der Hohlraum (11, 27) zylinderförmig ausgebildet ist.

6. Rettungsgerät nach einem oder mehreren der vorangehenden Ansprüche, dadurch gekennzeichnet, daß die Höhe bzw. die Länge des Hohlraums (11) kleiner als die gesamte Länge eines Instruments ausgebildet ist.

7. Rettungsgerät nach einem oder mehreren der vorangehenden Ansprüche, dadurch gekennzeichnet, daß das Rettungsgerät (1, 19) und/oder die Hülse (6) mindestens eine Öse (8) aufweist.

8. Rettungsgerät nach einem oder mehreren der vorangehenden Ansprüche, dadurch gekennzeichnet, daß die Hülse (6, 24) oder das Schneidwerkzeug (2, 20) eine, vorzugsweise gehärtete, Spitze (9, 26) aufweist.

9. Rettungsgerät nach einem oder mehreren der vorangehenden Ansprüche, dadurch gekennzeichnet, daß die Spitze (9) mit einer Schutzschicht versehen ist.

10. Rettungsgerät nach einem oder mehreren der vorangehenden Ansprüche, dadurch gekennzeichnet, daß die Schutzschicht aus Kunststoff besteht

11. Rettungsgerät nach einem oder mehreren der vorangehenden Ansprüche, dadurch gekennzeichnet, das Schneidwerkzeug (2, 20) als Klinge ausgebildet ist und das Schneidwerkzeug (2, 20) über eine Schutzeinrichtung für die Klinge verfügt.

12. Rettungsgerät nach einem oder mehreren der vorangehenden Ansprüche, dadurch gekennzeichnet, daß die Schutzeinrichtung als ein der Klinge gegenüber angeordneter Vorsprung (4) mit seitlichen Ausnehmungen zur Klinge (3) ausgebildet ist.

13. Rettungsgerät nach einem oder mehreren der vorangehenden Ansprüche, dadurch gekennzeichnet, das Rettungsgerät (1, 19) im wesentlichen aus Aluminium besteht.
